# EUROPEAN PATENT APPLICATION

(11) **EP 2 579 590 A1**
(43) Date of publication of application: **10.04.2013**
(21) Application number: 10852364.8
(22) Date of filing: 02.06.2010
(51) Int. Cl.: H04N 7/18, G09G 5/00

(54) **ELECTRONIC IMAGE SYSTEM FOR INSTANTLY TAKING AND DISPLAYING IMAGE**

(71) Applicant: Shih, Shanle, Taipei County 248 (TW)
(72) Inventor: Shih, Shanle, Taipei County 248 (TW)
(74) Representative: Gee, Steven William
(86) International application number: PCT/CN2010/073478
(87) International publication number: WO 2011/150565

(57) **Abstract**

An electronic imaging system for capturing and displaying the images in real time is disclosed, which includes a controller, a display device and a left to right mirror module. The controller has a camera lens and a transmission unit. The camera lens can capture the image signals. The transmission unit transmits the captured image signals. The display device has a receiving unit and a display unit. The receiving unit receives the image signal from the transmission unit of the controller, and the display unit displays the images received in real time. The left to right mirror module is used to mirror the image signal, which is then displayed on the display device.

## Description

### BACKGROUND OF THE INVENTION

### 1. Field of the Invention

The present invention relates to an electronic imaging system, and more particularly to an electronic imaging system that can capture and display the images in real time.

### 2. The Prior Arts

As the scientific technology develops, the electronic imaging techniques are quickly advanced, and however, the prices become cheaper. The various electronic imaging devices, such as the cameras, or the displays, are widely used in many applications. People can have a good life by viewing the lively moving images.

In the applications of the electronic imaging techniques, it is important that the images can be captured and displayed in real time. The user can capture the moving images, and display the captured images on the display device in real time through the data transmission during the daily life activities or the work, so that the user or other people can obtain the state of the user or the message in real time.

In one example, the image capturing device can capture the appearance of a user for display, so that the user can view his/her own image on the display device in real time. Accordingly, the user can view and arrange his/her own appearance.

In another example, some cars may be provided with a camera lens to capture a rear view for facilitating the driver to drive the vehicle back.

Although the prior art mentioned above is not a new concept, the people can have a new experience. Because the prices of the electronic devices become cheaper, the different amounts of the various-sized display devices are disposed on the building walls, indoor, transportation vehicles, elevators, etc. As the photography equipments are miniaturized, the portable photography equipments are quite popular, which bring more convenience to the users.

A convenience to the users is very important. The currently available real-time monitors are usually non-portable. On the other hand, the conventional handheld cameras are complicated to be operated, and are not used in the aforementioned applications. Moreover, the image capturing devices and the display devices are separate devices, and the integration of the image capturing devices and the display devices may have compatibility problems. More particularly, when the camera is used for arranging one's appearance, the image captured by the camera is reversed when the image is displayed. It is more convenient that the actual image can be viewed if the image captured by the camera is left to right mirrored.

Accordingly, there are many problems in the prior art needed to be solved.

### SUMMARY OF THE INVENTION

One objective of the present invention is to provide an electronic imaging system for capturing and displaying the images in real time. An integrated display system is used to facilitate the arrangement of one's appearance so that a controller and a display device are more valuable.

Another objective of the present invention is to provide an electronic imaging system for capturing and displaying the images in real time, which is easily installed, for example, at the living room of home, in transportation vehicles, or elevators. The images captured by the camera of the controller can be displayed at any sites installed with the display screen which is connected to the camera. No compatibility problems thus will occur for use.

Another objective of the present invention is yet to provide an electronic imaging system for capturing and displaying the images in real time. The displayed image can be left to right mirrored, which is controlled by a controlling unit for the convenience of the user.

In order to achieve the above objectives of the present invention, an electronic imaging system for capturing and displaying the images in real time is provided, which comprises a controller, a display device, and a left to right mirror module. The controller has a camera lens and a transmission unit. The camera lens can capture the image signals. The transmission unit transmits the captured image signals. The display device includes a receiving unit and a display unit, wherein the receiving unit receives the image signal transmitted from the transmission unit, and the display unit displays the images received in real time. The left to right mirror module mirrors the captured image signal to be displayed on the display device.

The image signal is transmitted from the transmission unit to the receiving unit by wireless transmission or wire transmission. The left to right mirror module can be installed in the controller, or the display device, and controlled by a hardware system or software system.

The controller has a plurality of controlling units to control the camera lens and the left to right mirror module. The controlling units can be buttons, rotary knobs, or levers.

The advantages of the present invention are listed as bellow:

(1) Through the left to right mirror module, the image of the user can be mirrored for the convenience of arranging his/her appearance.

(2) The electronic imaging system is easily installed, for example, at the living room of home, in transportation vehicles, or elevators. The images captured by the camera of the controller can be displayed at any sites installed with the display screen which is connected to the camera. No compatibility problems thus will occur for use.

### BRIEF DESCRIPTION OF THE DRAWINGS

The present invention will be apparent to those skilled in the art by reading the following detailed description of a preferred embodiment thereof, with reference to the attached drawings, in which:

FIG. 1 is a structure block diagram according to one embodiment of the present invention;

FIG. 2 is a structure block diagram according to another embodiment of the present invention;

FIG. 3 is a schematic view showing that the front image of the user is captured according to the present invention;

FIG. 4 is a schematic view showing that the front image of the user is displayed according to the present invention;

FIG. 5 is a schematic view showing that the front image of the user is left to right mirrored according to the present invention;

FIG. 6 is a schematic view showing that the side image of the user is displayed according to the present invention; and

FIG. 7 is a schematic view showing that the rear image of the user is displayed according to the present invention.

### DETAILED DESCRIPTION OF THE PREFERRED EMBODIMENTS

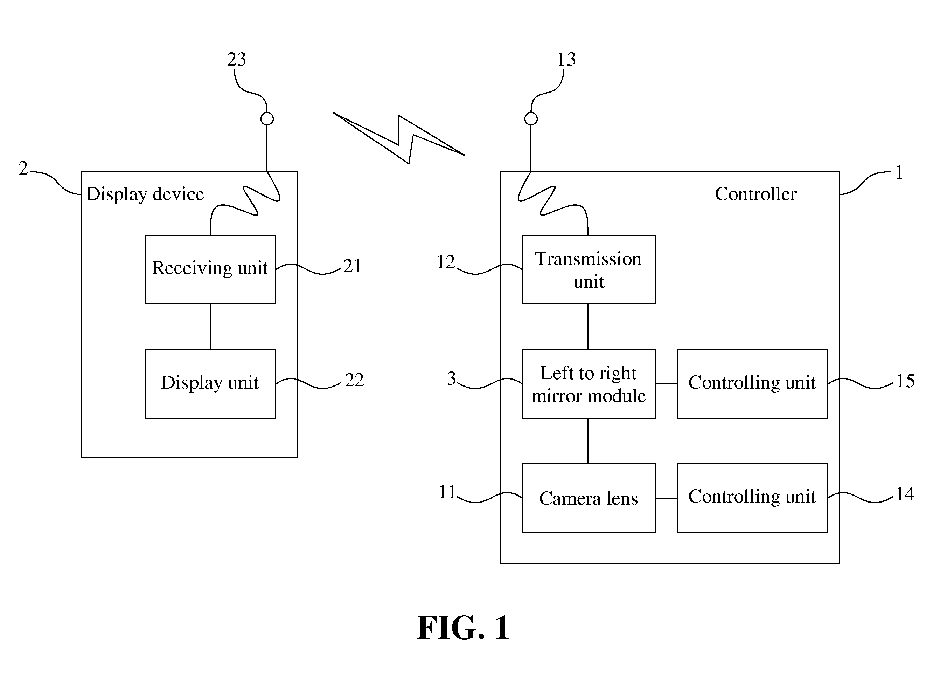

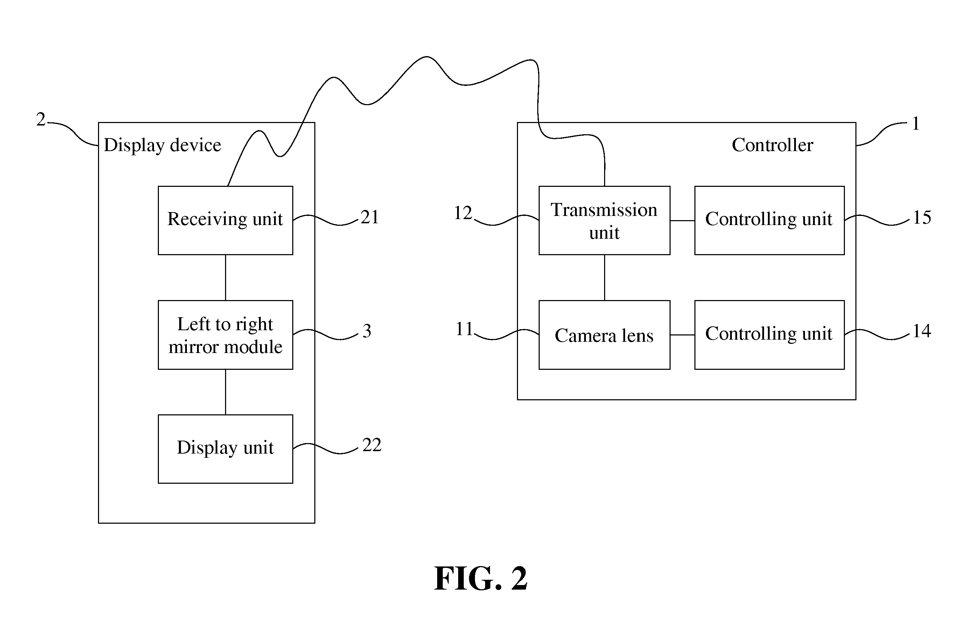

FIGS. 1 and 2 are the structure block diagrams of an electronic imaging system for capturing and displaying the images in real time. The electronic imaging system includes a controller 1, a display device 2, and a left to right mirror module 3.

The controller 1 has a camera lens 11 and a transmission unit 12. The cameral lens 11 can capture an image signal, and the image signal can be sent out in real time through the transmission unit 12.

The display device 2 has a receiving unit 21 and a display unit 22. The receiving unit 21 receives the image signals from the transmission unit 12 of the controller 1, and the received image will be displayed on the display unit 22 in real time.

The left to right mirror module 3 performs a left to right mirroring on the image signal captured by the camera lens 11, and then the mirrored image is displayed on the display device 2.

As shown in FIG. 1, the image signal can be transmitted from the transmission unit 12 to the receiving unit 21 by wireless transmission. Wireless transmission can be infrared transmission, Wi-Fi transmission, Bluetooth, modulated frequency, and micro-wave, which have the function of the wireless data transmission. The antennae 13 and 23 can be provided in compliance with the wireless transmission used between the transmission unit 12 and the receiving unit 21. The antennae 13 and 23 can be built in the controller 1 or the display device 2, and can also be extended outside of the controller 1 or display device 2.

As shown in FIG. 2, the image signal can be transmitted from the transmission unit 12 to the receiving unit 21 by wire transmission. The wire transmission can be implemented through serial ports, parallel ports, or network lines.

The left to right mirror module 3 can be installed in the controller 1 or the display device 2. The left to right mirror module 3 is controlled by a hardware system or a software system for left to right mirroring the image signal.

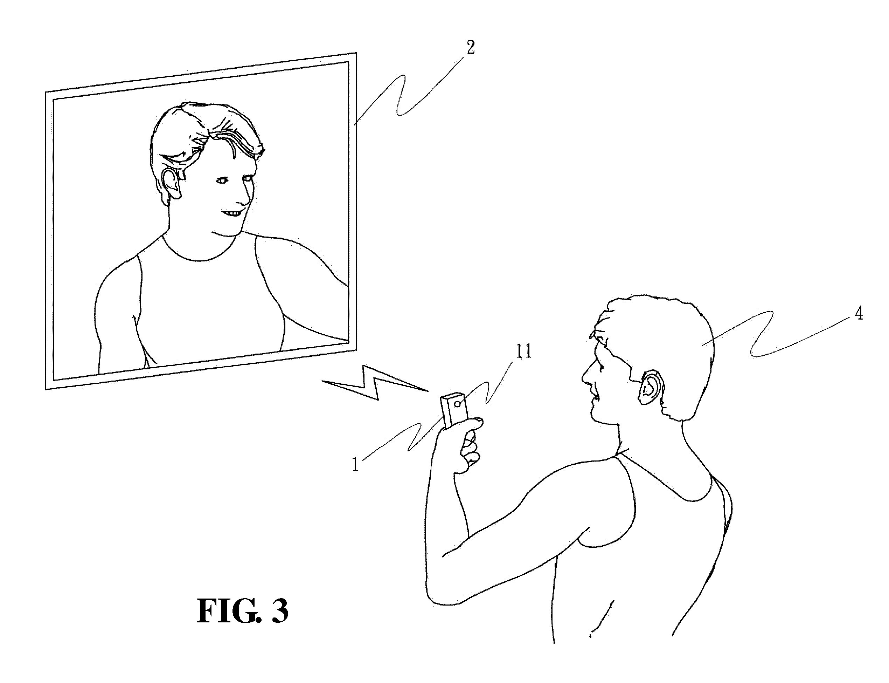

As shown in FIGS. 3∼5, the present invention is emphasized on the image reflection. When a user 4 wants to arrange his/her appearance at a site (for example, before a television set) equipped with an electronic imaging system of the present invention, the portable controller 1 is connected to the display device 2. The face can be captured by the camera lens 11 of the controller 1, and then captured image signal of the user's face is transmitted to the display device 2. The user 4 thus can watch the display device 2 to arrange his/her appearance. The user 4 can also desirably adjust the position of the camera lens 11 to look at the other parts. The captured image of the user's face is laterally reversed on the display device 2, which may cause some problem to the user 4 when look at his/her image. Through the left to right mirror module 3, the displayed image can be left to right mirrored for the convenience of viewing the appearance of the user.

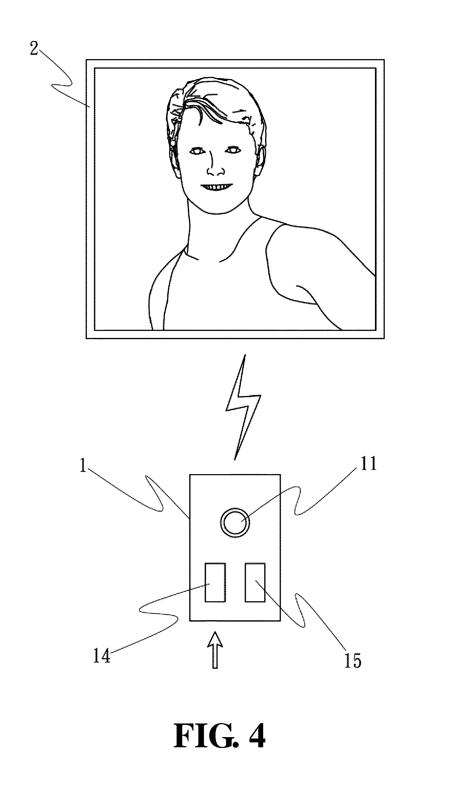

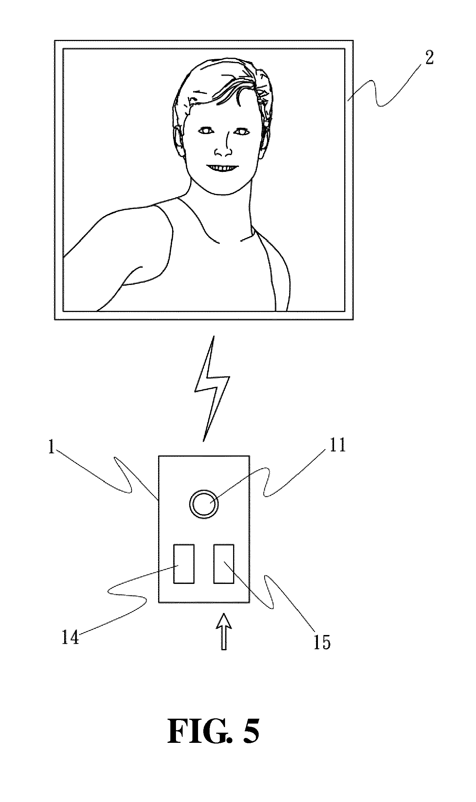

The controller 1 is provided with the controlling units 14 and 15 to respectively control the camera lens 11 and the left to right mirror module 3. The controlling units 14 and 15 include buttons, rotary knobs, and levers. As shown in FIG. 4, the user 4 can operate the camera lens 11 through the controlling unit 14 so that his front image is captured. As shown in FIG. 5, after the front image of the user 4 is displayed on the display device 2, the front image is left to right mirrored through the left to right mirror module 3 which is controlled by the controlling unit 15.

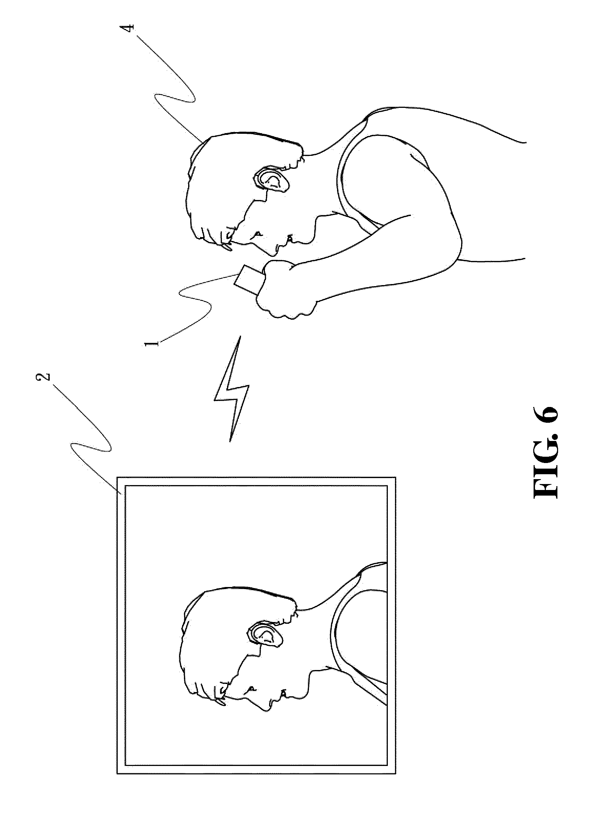

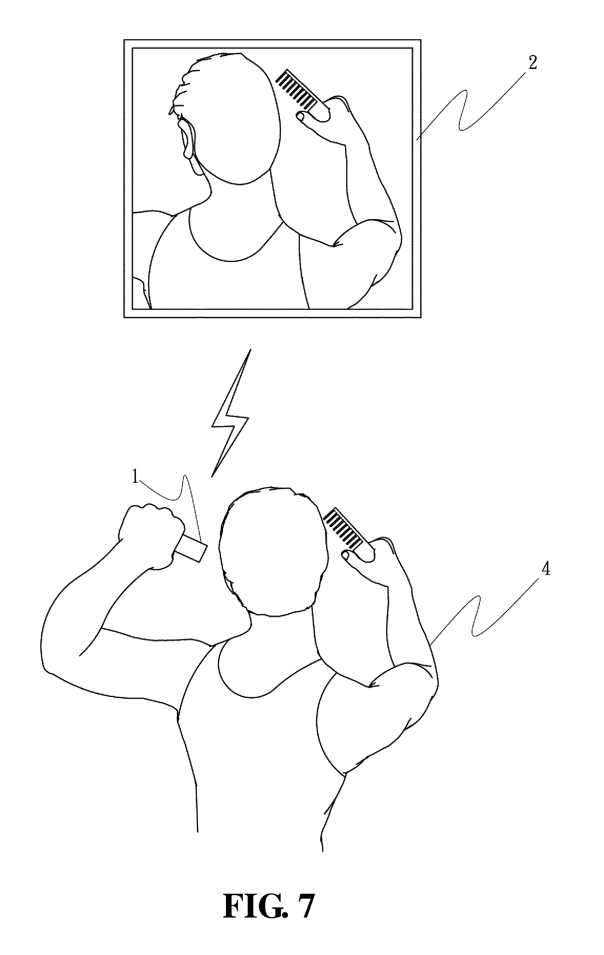

Referring to FIGS. 6 and 7, the side or the rear image of the user 4 can also be captured. As shown, because the directions of the displayed image and the actual image are the same, the user 4 will not feel it inconvenient when viewing his/her image. Accordingly, there is no need to operate the left to right mirror module 3. In other words, the user may have the option to use or not use the left to right mirror module 3.

The foregoing description is intended to only provide illustrative ways of implementing the present invention, and should not be construed as limitations to the scope of the present invention. While the foregoing is directed to embodiments of the present invention, other and further embodiments of the invention may thus be devised without departing from the basic scope thereof, and the scope thereof is determined by the claims that follow.

## Claims

1. An electronic imaging system for capturing and displaying images in real time, comprising:
a controller including a camera lens and a transmission unit, the camera lens being used to capture an image signal, the transmission unit transmitting the captured image signal in real time;
a display device including a receiving unit and a display unit, wherein the receiving unit receives the image signal transmitted from the transmission unit, and the display unit displays the images received in real time;
a left to right mirror module mirroring the image signal to be displayed on the display device.

2. The electronic imaging system of claim 1, wherein the image signal is transmitted from the transmission unit to the receiving unit by wireless transmission.

3. The electronic imaging system of claim 1, wherein the image signal is transmitted from the transmission unit to the receiving unit by wire transmission.

4. The electronic imaging system of claim 1, wherein the controller includes controlling units for controlling the camera lens and the left to right mirror module.

5. The electronic imaging system of claim 4, wherein the controlling units include buttons, rotary knobs, and levers.

6. The electronic imaging system of claim 1, wherein the left to right mirror module is installed on the controller.

7. The electronic imaging system of claim 1, wherein the left to right mirror module is installed on the display device.

8. The electronic imaging system of claim 1, wherein the left to right mirror module is controlled by a hardware system for mirroring the image signal.

9. The electronic imaging system of claim 1, wherein the left to right mirror module is controlled by a software system for mirroring the image signal.
